# EUROPÄISCHE PATENTSCHRIFT

(11) **EP 0 560 337 B1**
(45) Veröffentlichungstag und Bekanntmachung des Hinweises auf die Patenterteilung: **18.06.1997**
(21) Anmeldenummer: 93103873.1
(22) Anmeldetag: 10.03.1993
(51) Int. Cl.: G01L 5/00

(54) **Verfahren und Vorrichtung zur Steck- und Ziehkraftmessung an Steckkontakten**
Method and device for measuring the insertion and pulling force of contacting plugs
Méthode et dispositif pour mesurer la force d'insertion et de tirage des prises de contact

(30) Priorität: 13.03.1992 DE 4208138
(43) Veröffentlichungstag der Anmeldung: 15.09.1993
(60) Teilanmeldung: 96114452.4
(73) Patentinhaber: S + S ELECTRONIC GmbH & Co. KG, 94513 Schönberg (DE)
(72) Erfinder: Frisch, Helmuth, D-8351 Schönberg (DE)
(74) Vertreter: Pfenning, Meinig & Partner

(56) Entgegenhaltungen:
- EP-A- 0 257 137
- EP-A- 0 370 451
- DE-A- 4 014 221
- PATENT ABSTRACTS OF JAPAN vol. 14, no. 554 (P-1140) 10. Dezember 1990 & JP-A-02 236 429

## Beschreibung

Die Erfindung betrifft ein Verfahren zur Steck- und Ziehkraftmessung an Steckkontakten, die am Band mit Stanzwerkzeugen gefertigt werden. Sie ist besonders für den Einsatz direkt in der Produktion bei der Herstellung der Steckkontakte in einer Stanzerei mit parallel laufender Qualitätskontrolle geeignet sowie auch bei der Weiterverarbeitung der Kontakte in Montageautomaten od.dgl.

Bisher erfolgt die Qualitätskontrolle nach der Herstellung von Steckkontakten der verschiedensten Ausführungsformen getrennt von der Produktion unter Laborbedingungen, so daß herkömmliche Einrichtungen zur Kraftmessung Verwendung finden können. Unter diesen Bedingungen treten die im rauhen Stanzbetrieb vorhandenen Störgrößen wie die verschiedensten Schwingungen mit den unterschiedlichsten Frequenzen und Amplituden nicht auf, so daß die Meßergebnisse nicht negativ beeinflußt werden. In diesem Falle ist es ohne zusätzlichen Aufwand möglich, die Steck- bzw. Ziehkraft ohne Störkomponenten zu messen.

Mit den herkömmlichen Verfahren ist es jedoch nicht möglich, den bereits genannten negativen Einfluß unter Produktionsbedingungen auszuschließen und nur die reinen unverfälschten Steckund Ziehkräfte zu messen.

Bei steigenden Qualitätsanforderungen ist der Aufwand zur externen nachträglichen Qualitätskontrolle der gefertigten Steckkontakte unvertretbar hoch, da mit steigender Anzahl der Transportaufwand zur Meßstation ansteigt und außerdem die Meßgeschwindigkeit so weit erhöht werden muß, daß auch eine negative Beeinflussung der Meßergebnisse durch die dadurch hervorgerufenen Schwingungen auftritt.

In der EP 0 370 451 A3 ist eine Vorrichtung beschrieben, mit der ein Crimpanschluß einer fortlaufenden Schar, von elektrischen Verbindungselementen crimpfähigen Krallen zugeordneten elektrischen Leitungen beschrieben. Hierbei wird der Crimpvorgang durch die Verwendung eines Kraftmessers, die einem Ober- und Unterwerkzeug übertragene zum Crimpen der Krallen genutzte Kraft, eingesetzt und elektronisch ausgewertet.

Eine Vorrichtung zur Messung und Steuerung von Federkontakten einer Klemmleiste ist in der EP 0 257 137 beschrieben. Dabei werden Meßstifte in die Federkontakte hinein- und herausgeführt und die dabei auftretenden Kräfte gemessen. Es werden mehrere Meßstifte gleichzeitig in benachbart angeordnete Öffnungen der Klemmleiste in die Federkontakte eingeführt und die Kräfte in Längsrichtung beim Einführen und Herausziehen aus den Federkontakten gemessen. Die Verschiebung der Meßstifte wird mit zusätzlichen Elementen erfaßt und die entsprechenden Signale einer Steuereinheit zugeführt, um zu bestimmen, ob ein kontrollierter Bereich bestimmte Erfordernisse erfüllt oder nicht. Der Vergleich wird dabei innerhalb eines vorgegebenen Kraftbereiches durchgeführt. Die Geschwindigkeit, mit der die Messungen durchgeführt werden sollen, sollte dabei der maximalen Produktionsgeschwindigkeit der Klemmleisten entsprechen.

Es ist daher Aufgabe der Erfindung, ein Verfahren zur Messung der Steck- und Ziehkraft an Steckkontakten unter Produktionsbedingungen, wobei der Einfluß von Störgrößen verhindert wird, zu schaffen.

Erfindungsgemäß wird diese Aufgabe durch die im Anspruch 1 genannten Merkmale gelöst. Vorteilhafte Weiterbildungen und Ausführungsformen ergeben sich aus den Merkmalen der abhängigen Ansprüche.

Bei den in dieser Beschreibung genannten und in den Figuren gezeigten Vorrichtungen handelt es sich nicht um Ausführungsarten des beanspruchten Verfahrens, sondern um Beispiele, die das Verständnis der Erfindung erleichtern.

Mit dem erfindungsgemäßen Verfahren für die Steckund Ziehkraftmessung ist es möglich, direkt an der Stanzmaschine für die Herstellung der Steckkontakte diese Messungen in großer Anzahl durchzuführen und bei auftretenden Qualitätsmängeln die gewonnenen Signale dazu zu nutzen, um eine an die Maschine gekoppelte oder externe Abtrenneinrichtung anzusteuern. Somit ist gesichert, daß keine fehlerhaft gefertigten Steckkontakte die Produktion verlassen.

Durch geeignete Programmierung eines Rechners können die laufenden Meßergebnisse dazu genutzt werden, eine Qualitätstendenz zu ermitteln und außerdem Beschädigungen an den Stanzmaschinen, Werkzeugen, den Meßdornen oder dem Antrieb für die Meßvorrichtung zu verhindern. Dies kann dadurch geschehen, daß verschlissene Werkzeuge rechtzeitig ausgetauscht werden oder in besonderen Notfällen ein Maschinenstopp automatisch eingeleitet wird.

Dadurch, daß Meßwerte nur in einem bestimmten definierten Meßhubbereich erfaßt und verarbeitet werden, können geringere Ansprüche an die Speicherkapazität und Rechengeschwindigkeit der zu verwendenden Mikrorechner gestellt werden.

Das Meßverfahren kann in einfacher Ausführung auf die Ermittlung von Spitzenmeßwerten begrenzt werden, so daß in diesem Fall auf eine synchrone Wegmessung des Meßdornhubes verzichtet werden kann.

In einer komfortableren Variante ist es jedoch ebenfalls möglich, einen Wegsensor vorzusehen, mit dem es dann möglich ist, Kraft-Wegverläufe zu erfassen. Mit diesen gemessenen Kraft-Wegverläufen können beim Vergleich mit vorgegebenen, in einem Speicher abgelegten werkzeugabhängigen Soll-Kurvenverläufen auch Schlüsse auf die eventuell aufgetretene Fehlerart erkannt werden. So ist es z.B. möglich, die Meßhubbewegung sofort zu stoppen, wenn die Meßkraft bereits zu Beginn des Auftreffens des Meßdornes auf den Steckkontakt einen Maximalwert überschreitet, so daß eine Beschädigung des Meßdornes und der gesamten Meßvorrichtung verhindert werden kann.

Die Meßvorrichtung kann mit einem eigenen Antriebssystem ausgestattet oder direkt mit Stanzwerkzeugen gekoppelt sein. Dies ist dadurch möglich, daß die Meßkraft nicht direkt über den Meßdorn auf einen Sensor übertragen wird, sondern der Meßdorn mit dem Sensor mittels eines flexiblen Elementes, das in axialer Richtung fest mit beiden verbunden ist. Dadurch kann ausschließlich die Steck- und/oder Ziehkraft gemessen und gleichzeitig der störende Einfluß von Quer- und Torsionskräften unterdrückt werden. Weiterhin werden Fluchtungsfehler ohne zusätzlichen Aufwand ausgeglichen.

Das Element kann in günstiger Weise ein Federstab oder ein Gelenk sein, das direkt am Sensor der in Form eines geschlitzten Biegebalkens ausgebildet ist und am Meßdorn in Richtung der zu messenden Kräfte befestigt ist oder als Teil eines zwischengeschalteten Adapters ausgebildet ist.

Dieser Adapter überträgt durch seine dreiteilige Ausführung mit den zwei Kupplungselementen, die über einen Federstab verbunden sind und in einem Abstand voneinander gehalten sind, ausschließlich die Kräfte, die in Steck- bzw. Ziehrichtung wirken. Der Federstab gleicht Torsionskräfte aus, die durch eventuelle Verkantung des Meßdornes gegenüber dem Steckkontakt hervorgerufen werden können. Seitliche Verkantungen, die den Querkrafteinfluß hervorrufen würden, werden dadurch ausgeglichen, daß sich der Federstab, der die beiden Kupplungselemente des Adapters in einem Abstand hält, verbiegen kann und der Kraftfluß in Richtung der neutralen Faser des Federstabes erfolgt.

Die beiden äußeren Kupplungselemente des Adapters sollen dabei so ausgefüllt sein, daß ein leichter Austausch gegeben ist. Hierzu kommen bevorzugt Schraubverbindungen in Frage, die jedoch sicherstellen müssen, daß ein seitliches Verkanten ausgeschlossen ist und Spielfreiheit, sowohl in axialer als auch in radialer Richtung, gegeben ist.

Unter den bereits genannten rauhen Produktionsbedingungen ist die Verwendung von Dehnmeßstreifen zur Kraftmessung besonders geeignet, da sie wesentlich unempfindlicher gegenüber Schwingungseinflüssen sind. Dabei liegen die zu messenden Kräfte im Bereich von einem Newton bis zu einigen hundert Newton. Da die Messung mit einigen hundert Hüben pro Minute erfolgt, ist die Verwendung eines üblicherweise quer zur Meßrichtung angebrachten Biegebalkens nicht zu empfehlen, weil er schwingt, so daß die Meßergebnisse in unzulässiger Weise verfälscht werden. Der erfindungsgemäße Kraftmeßsensor unter Verwendung von Dehnmeßstreifen besteht somit aus Außenteilen, die mit einem rechteckigen Steg verbunden sind. Dabei sind an den Außenseiten der Außenteile Elemente vorgesehen, die auf der einen Seite zum Anschluß des Adapters und auf der anderen Seite zur Befestigung des Sensors an einem Meßschlitten dienen. Um eine möglichst große Meßempfindlichkeit im Meßbereich zu sichern, ist der Steg mindestens zweifach geschlitzt, wobei die Schlitze quer zur Längsrichtung des Steges verlaufen und die Schlitzöffnungen an jeweils entgegengesetzten Schmalseiten des Steges im gleichen Abstand von den Außenteilen liegen. Auf der entgegengesetzten Schmalseite des Steges gegenüber der jeweiligen Schlitzöffnung ist jeweils ein Dehnmeßstreifen befestigt, dessen Meßdrähte in Längsrichtung des Steges verlaufen. Die beiden anderen Dehnmeßstreifen einer üblicherweise verwendeten Brückenschaltung können auf einer oder auf beiden breiteren Seiten des Steges befestigt sein, so daß sie außerhalb der geschlitzten Bereiche liegen und ihre Meßdrähte orthogonal zur Längsrichtung des Steges verlaufen. Durch die eingebrachten Schlitze verformt sich der Steg bei Einwirkung von Kräften in Längsrichtung des Sensors besonders in den Bereichen, in denen die Dehnmeßstreifen auf den Schmalseiten des Steges befestigt sind, so daß eine hohe Meßempfindlichkeit vorhanden ist. Werden zusätzliche Schlitze an den äußeren Enden des Steges eingebracht, die gespiegelt symmetrisch ausgeführt sind, wird das Übertragungsverhalten noch vergrößert, da die Krafteinleitung außermittig auf der entgegengesetzt zu der Seite erfolgt auf der die Öffnungen der inneren Schlitze sind und somit die Kraft über einen größeren Hebel eingeleitet wird, was eine größere Verformung im Bereich der Dehnmeßstreifen auf den Schmalseiten des Steges hervorruft.

Die Meßempfindlichkeit kann durch Variation des Steg-Breiten/Höhenverhältnisses, der Schlitzlänge, der Schlitzbreite und durch unterschiedliche Bohrungsdurchmesser von Bohrungen, die an den Enden der beiden Schlitze, die nicht an der Außenseite des Steges liegen und in die diese Schlitze auslaufen, verändert werden. Diese Bohrungen bringen einen weiteren Vorteil, indem in diesem mechanisch besonders belasteten Bereich die Ausbildung von Brüchen verhindert wird.

Die beiden Dehnmeßstreifen auf der bzw. den Breitseiten des Steges dienen ausschließlich der Temperaturfehlerkompensation. Ebenfalls auf einer Breitseite des Steges ist ein Lötstützpunkt vorgesehen, mit dem alle vier Dehnmeßstreifen leitend verbunden sind und an dem außerdem vier Leiter eines Kabels verlötet sind. Dieses Kabel wird durch eine Öffnung in einem Gehäuse, das den Steg vollständig umschließt, geführt. An die öffnung, durch die das Kabel geführt wird, ist ein nach außen weisender Stutzen aufgesetzt, auf den wiederum ein den Stutzen und das Kabel umschließender Schrumpfschlauch aufgeschoben wird. Damit wird erreicht, daß der Sensor gegenüber äußeren negativen Einflüssen wie Schmutz und Feuchtigkeit abgeschirmt ist.

In bevorzugter Weise sollt der Sensor so eingebaut werden, daß die Breitseite des Steges orthogonal zu den Hauptschwingungsrichtungen der Stanzmaschine oder der Montageautomaten liegt, da dadurch der Einfluß von Verkantungsfehlern beim Aufsetzen des Meßdornes reduziert wird.

Nachfolgend soll die Erfindung anhand von Beispielen näher beschrieben werden. Es zeigen:
- Fig. 1: ein Blockschaltbild der Meßwertverarbeitung;
- Fig. 2: ein Diagramm eines Kraft-Wegverlaufes;
- Fig. 3: eine Schnittdarstellung der Meßvorrichtung;
- Fig. 4: einen Schnitt durch einen Adapter;
- Fig. 5: einen Längsschnitt durch einen Hubantrieb;
- Fig. 6: eine Seitenansicht dieses Hubantriebes, und
- Fig. 7A,7B,7C,7D: Ansichten eines Steck-und Ziehkraftmeßsensors,
- Fig. 8: eine Ausführungsform eines Meßdornes im Schnitt.

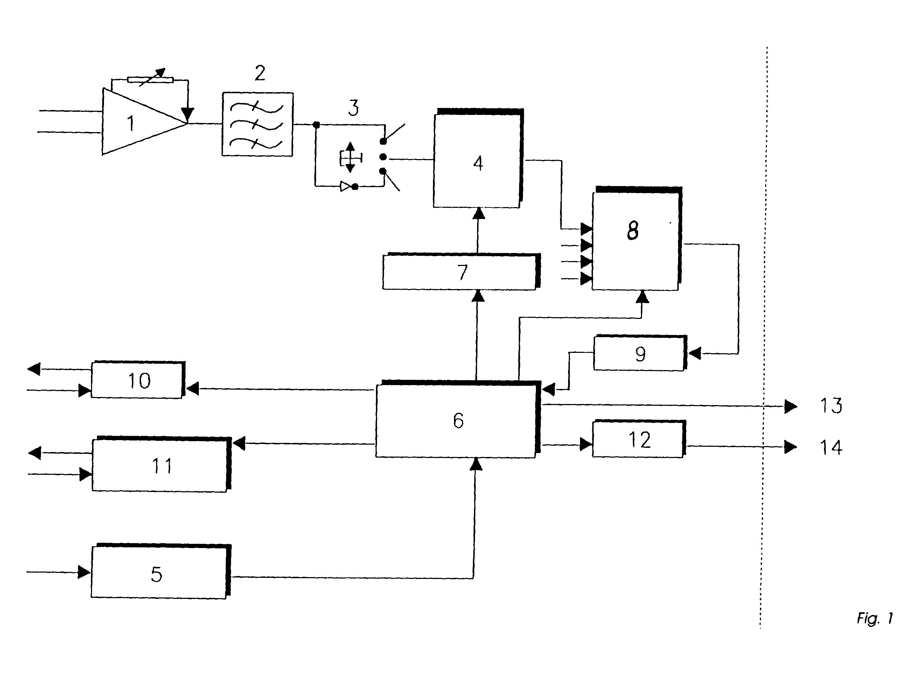

Aus dem Blockschaltbild nach Fig. 1 geht die Meßsignalverarbeitung und die Bereitstellung von Steuerund Auswertesignalen hervor. Das von Dehnmeßstreifen oder einem Piezo-Sensor, dann gemessene Signal, wenn sich das Stanzwerkzeug im Bereich des unteren Umkehrpunktes befindet und dadurch gleichzeitig die Haltefunktion der Steckkontakte 15 realisiert wird, wird in einem Verstärker 1 auf ein verarbeitbares Maß gebracht, anschließend einem Filter 2 zugeführt, in dem eventuell noch vorhandene Störgrößen beseitigt werden, und anschließend einem Inverter 3 zugeführt, in dem eventuell gemessene negative Werte in positive Meßsignale invertiert werden. Dieses Signal gelangt dann in einen Spitzenwertspeicher 4, in dem für jeweils einen Meßhub der Kraftspitzenwert gehalten wird. Der Meßhubbereich ist werkzeugabhängig und muß demzufolge einstellbar sein. Dies erfolgt zweckmäßigerweise über eine Tastatureingabe, bei der der Meßhubbereich manuell eingegangen werden kann oder bei Eingabe einer entsprechenden Werkzeugidentitätsnummer aus einem Speicher der entsprechende Meßhubbereich abgerufen und dem Spitzenwertspeicher zugeführt wird. Der Spitzenwertspeicher wird im vorgegebenen Meßhubbereich aktiviert, indem der Signalfluß von einem Sensor 5, der ein proportionales Signal des Meßhubweges abgibt, über einen Mikrorechner 6 und einen Meßhubbereichseinsteller 7 dem Spitzenwertspeicher 4 zu dessen Aktivierung zugeführt wird. Überschreitet der gemessene Spitzenwert einen werkzeugspezifischen maximal zulässigen Kraftwert, wird ein Fehlersignal über einen Multiplexer 8 einem Schieberegister 9 des Mikrorechners 6 zugeführt. Das Schieberegister 9 hat dabei die Aufgabe, daß nicht bei jeder Feststellung eines Fehlers eine Abtrenneinrichtung 10 aktiviert wird, sondern dies erst nach Erreichen einer fest vorgegebenen Anzahl von Fehlersignalen, die im Schieberegister 9 gespeichert sein müssen, erfolgt. Der Mikrorechner 6 dient neben der Ansteuerung der Abtrenneinrichtung 10 der Einstellung des Meßhubbereiches auch der Ansteuerung der mechanischen Meßeinheit 11 und leitet außerdem Fehlerwerte über eine Fehlerausgabeeinheit 12 und Meßwerte über eine zusätzliche Ausgabe einem in diesem Blockschaltbild nicht dargestellten Leitrechner über zwei Ausgänge 13 und 14 zu. Im Leitrechner können die Meßwerte auf verschiedenste Weise ausgewertet werden, so daß z.B. Qualitätstendenzen ermittelt werden können. Außerdem kann eine Fehlerauswertung durchgeführt werden, die zur Steuerung des Stanzantriebes verwendet werden kann.

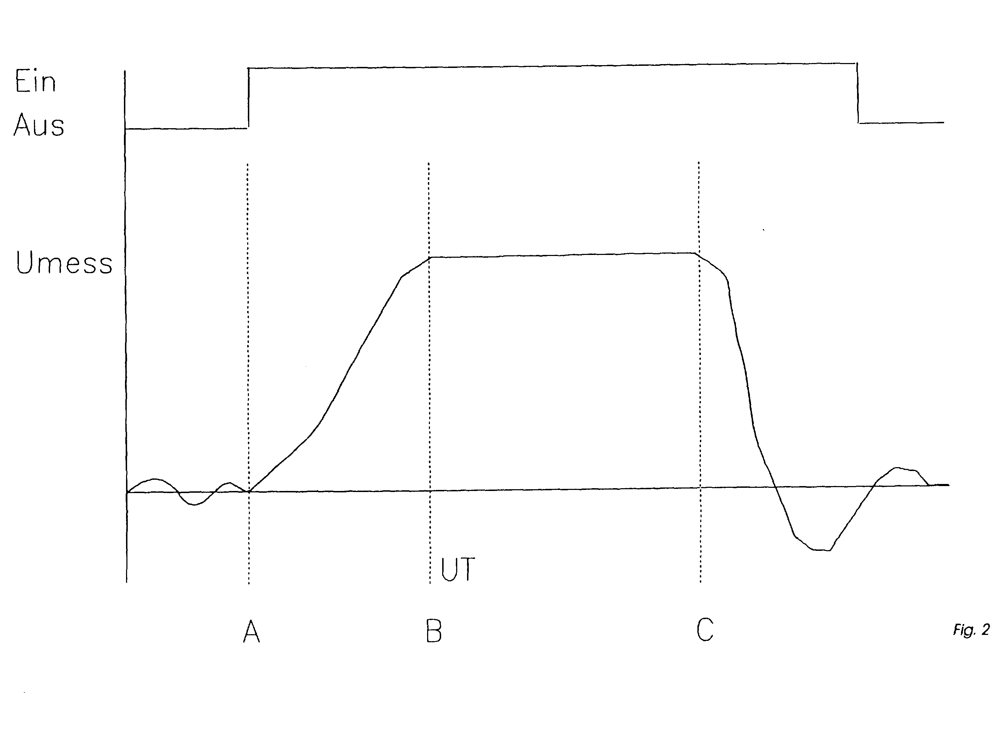

Aus dem in Fig. 2 dargestellten Diagramm geht ein typischer Kraft-Wegverlauf einer Steck- und Ziehkraftmessung an einem Steckkontakt hervor. Dabei markiert die erste gestrichelte Linie A das Auftreffen des Meßdornes auf dem Steckkontakt, der Bereich von der gestrichelten Linie A zur gestrichelten Linie B das Eintauchen des Meßdorns, der Bereich von der gestrichelten Linie B bis zur gestrichelten Linie C die Gleitphase und im Anschluß an die gestrichelte Linie C das Ausziehen des Meßdorns aus dem Steckkontakt. Die obere Linie kennzeichnet im eingeschalteten Bereich den Meßhubbereich, in dem die Speichereinheit aktiviert ist. Dies ist z.B. bei einem Kurbelantrieb mit einem Winkelsensor ein bestimmter Winkelbereich, in dem die Meßwerte erfaßt werden. Außerhalb dieses Bereiches ist die Speichereinheit nicht aktiv.

Wird nicht nur eine Spitzenwertmessung, sonder auch eine Kraft-Wegmessung durchgeführt, wird dieser gemessene Kurvenverlauf mit einer im Speicher abgelegten Sollkurve verglichen. Wird eine Kraft gemessen, die außerhalb eines vorgegebenen Toleranzbereiches um die Sollkurve liegt, wird ein Fehlersignal ausgelöst. Der gleiche Sachverhalt ergibt sich auch bei der Spitzenwertmessung, indem hier ein Vergleich des Meßwertes mit einem vorgegebenen Grenzwert durchgeführt wird. Bei Unterschreitung dieses Grenzwertes erfolgt ebenfalls eine Fehlermeldung.

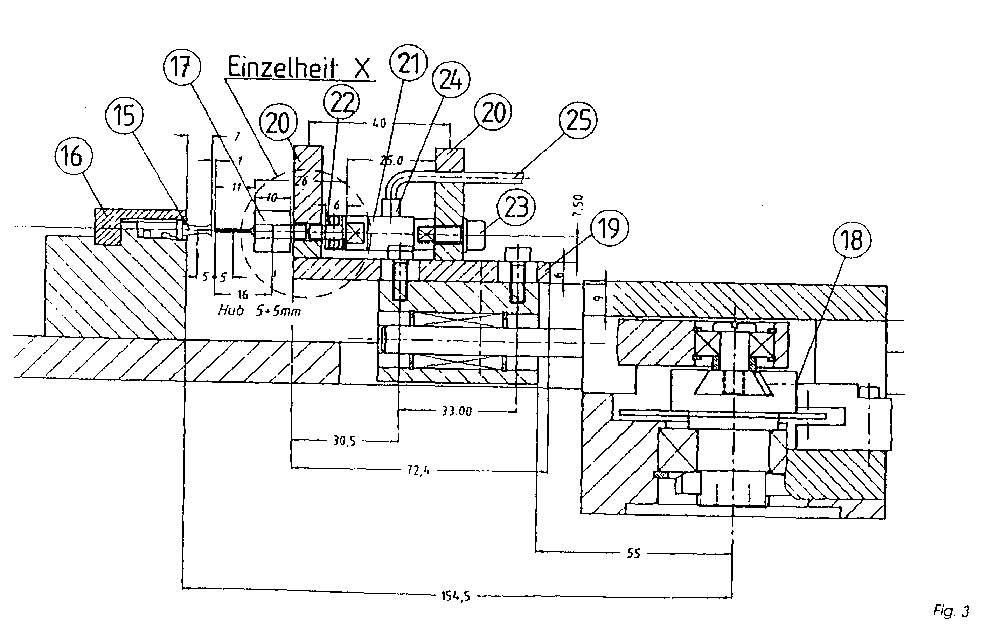

In der Fig. 3 ist eine vollständige mechanische Meßeinheit in einer Schnittdarstellung gezeigt. Hierbei ist ein Steckkontakt 15 am Werkzeugauslauf eines Stanzwerkzeuges dargestellt, der in Form eines Steckkontaktstreifens von einer Halteeinrichtung 16, beim Meßvorgang gehalten wird. Zur Messung der Steck- und Ziehkraft wird der auf einem Meßschlitten 19 befestigte Meßdorn 17 mittels eines Hubantriebes 18 in Richtung des Steckkontaktes 15 bewegt. Der Hubantrieb 18 ist vorzugsweise ein Kurbelantrieb mit Schrittmotor. Auf dem Meßschlitten 19 ist ein Sensorhalter 20 angebracht, auf dem wiederum der Sensor 21 mit dem an ihn gekoppelten Adapter 22 mittels einer Schraube 23 befestigt ist. Am Gehäuse des Sensors 21 ist ein Stutzen 24 angebracht, durch den ein Kabel 25 in das Innere des Sensors 21 geführt ist, über dessen Einzelleitungen die Meßsignale einem Verstärker zugeführt werden. Zum Schutz vor Feuchtigkeit, Staub und Schmutz ist über Kabel 25 und Stutzen 24 ein Schrumpfschlauch gezogen.

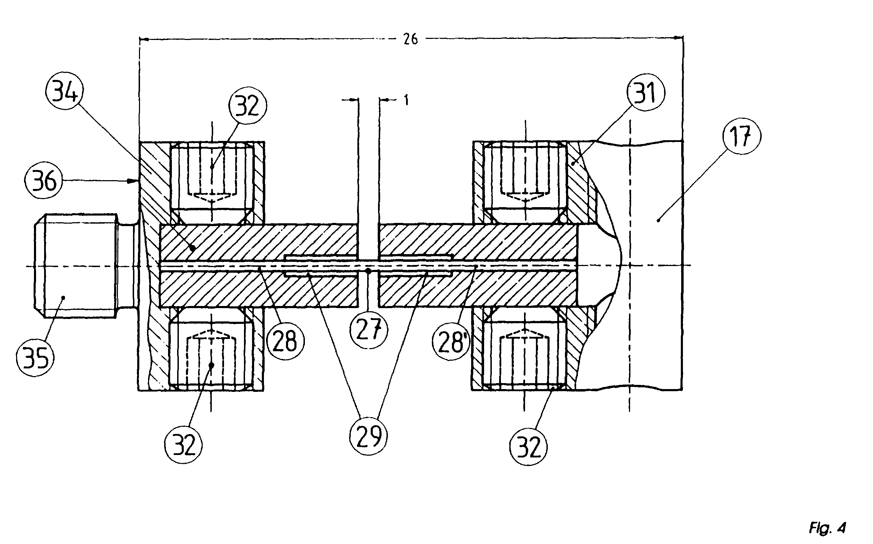

Das in der Fig. 3 eingezeichnete Einzelteil X ist in der Fig. 4 in vergrößerter und geschnittener Form abgebildet. Es handelt sich hierbei um den zwischen Meßdorn 17 und Sensor 21 fluchtend mechanische verbundenen Adapter 22. Der Adapter 22 verfügt über zwei Kupplungselemente 31, 34, durch die ein Federstab 27 geführt ist. Der Federstab 27 ist dabei in Bohrungen 28 der beiden Kupplungselemente 31, 34 verklemmt und überträgt die Steck- und Ziehkraft vom Meßdorn 17 zum Sensor 21 axialspielfrei. Der Federstab 27 hält dabei die beiden Kupplungselemente 31, 34 in einem Abstand, der vorzugsweise größer als die lichte Weite des Querschnittes des Federstabes 27 ist. An den gegenüberliegenden Seiten der Kupplungselemente 31, 34 sind in den Bohrungen 28 zusätzliche Sacklochbohrungen 29 mit größerem Durchmesser vorhanden, in denen der Federstab 27 mit einem gewissen Spiel geführt ist. Dieses Spiel dient dazu, daß im Falle einer schrägen Krafteinleitung über den Meßdorn 17 der Biegeradius des Federstabes 27 in diesem Bereich vergrößert wird, dadurch ein Ausweichen des Federstabes 27 möglich ist, und daß bei Verdrehung des Meßdornes 17 die drehbare Federstablänge vergrößert ist und dadurch die Belastung gering gehalten wird. Das äußere Ende des Kupplungselementes 31 ist auf der einen Seite als Klemmstück mit integriertem Meßdorn 17 mit Klemmschrauben 32 ausgebildet. An dem anderen Kupplungselement 34 des Adapters 22 ist ebenfalls ein Klemmelement mit Klemmschrauben 32 befestigt, wobei an diesem Klemmstück ein Befestigungselement 35 mit einer planen Fläche 36, die orthogonal zur Längsachse des Adapters 22 liegt, integriert ist. Das Befestigungselement 35 ist vorzugsweise als Schraube ausgebildet, deren Außengewinde in ein entsprechendes Innengewinde des Sensors 21 einschraubbar ist.

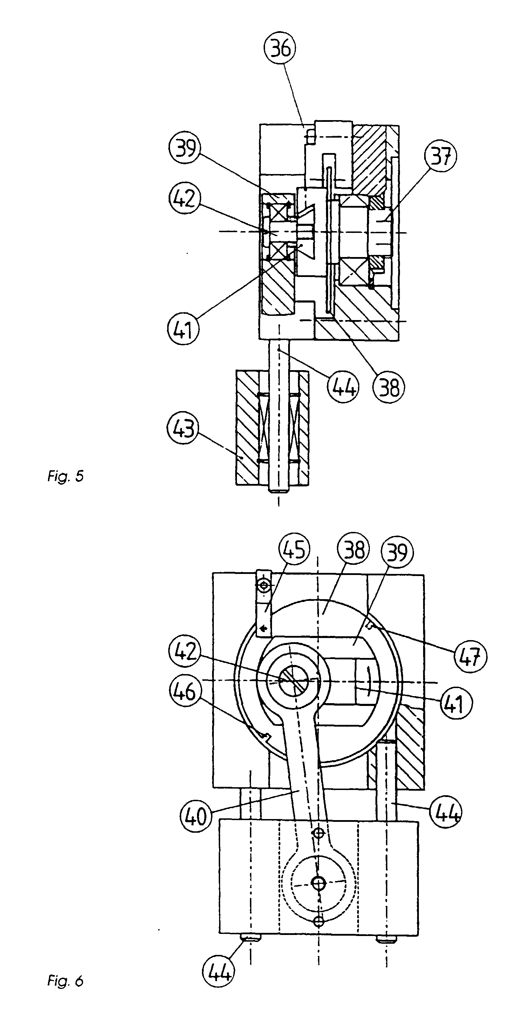

In der Fig. 5 ist in einer Schnittdarstellung der Kurbelantrieb des Meßschlittens 19 dargestellt. Hierbei ist in einem Gehäuse 36 eine Antriebswelle 37 drehbar gelagert. Auf der Welle 37 ist eine Scheibe 38 mit Markierungen zur inkrementalen Abtastung des Winkels vorhanden. Die Antriebswelle 37 ist außerdem mit einer Hubscheibe 39 gekoppelt, an der die in dieser Darstellung nicht sichtbare Pleuelstange 40 in einer Trapeznut 41 mit einer Klemmschraube 42 je nach gewünschtem Hubweg klemmbar ist. Die Meßschlittenauflage 43 wird über die Pleuelstange 40 in Meßrichtung bewegt und ist in einer doppelten Führung 44 gegen Verkanten gesichert.

In der Seitenansicht des Hubantriebes 18 (Fig. 6) ist eine andere Ausführungsform der Sensorscheibe 38 gegenüber der in der Fig. 5 beschriebenen erkennbar. Diese Sensorscheibe 38 verfügt an ihrem Rand über Aussparungen 46, 47, die zur Erkennung der Umkehrpunkte des Kurbeltriebes verwendet werden. Die Signalabfrage erfolgt hierzu mit einem optischen Sensor 45, der am Gehäuse 36 befestigt ist und die Signale beim Passieren der Aussparungen 46 und 47 liefert. Selbstverständlich können weitere Aussparungen vorgesehen werden, die bei der Steuerung des Hubmeßbereiches Verwendung finden.

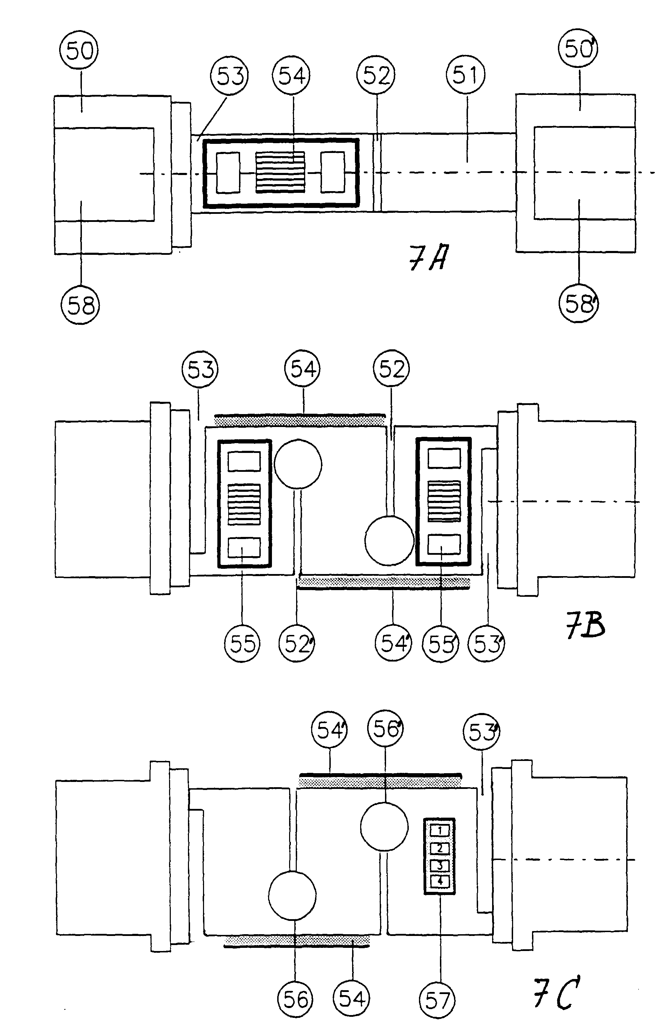

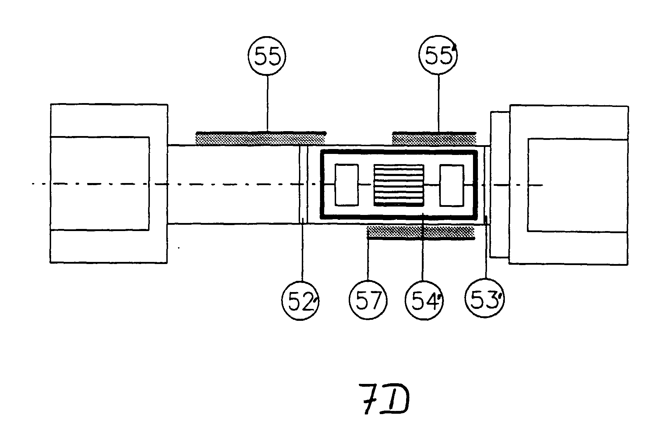

Aus den Darstellungen der Figuren 7A, 7B, 7C, 7D ist der Aufbau des Sensors 21 erkennbar. Die mit nicht dargestelltem Innengewinde versehenen Außenteile 50, 50' sind über einen Steg 51, mit rechteckigem Querschnitt, verbunden. In dem Steg 51 sind zwei Schlitze 52, 52' gespiegelt symmetrisch in gleichem Abstand von den Außenseiten des Steges 51 in beide Schmalseiten des Steges 51 eingebracht. Auf den Schmalseiten des Steges 51 sind jeweils ein Dehnmeßstreifen 54, 54' so befestigt, daß die Öffnungen der Schlitze 52, 52' freigelegt bleiben und die Dehnmeßstreifen 54, 54' im wesentlichen in dem Bereich des Steges 51 aufgeklebt sind, der gegenüber den Öffnungen der jeweiligen Schlitze 52, 52' liegt.

Außerdem sind zusätzliche Schlitze 53, 53' ebenfalls symmetrisch gespiegelt an den Außenseiten des Steges 51 eingebracht. Dabei weisen die Öffnungen dieser Schlitze 53, 53' jeweils zur entgegengesetzten Schmalseite des Steges 51, an denen die Öffnungen der benachbarten Schlitze 52 oder 52' liegen. Die Länge der Schlitze 52, 52' und 53, 53' sollte über die Mittelachse des Sensors hinausragen.

Die weiteren zwei bei einer üblichen Brückenschaltung erforderlichen Dehnmeßstreifen 55, 55' werden an den Breitseiten bzw. einer Breitseite des Steges 51 ebenfalls so geklebt, daß keine Überdeckung eines Schlitzes erfolgt. Die Meßdrähte der auf den Schmalseiten des Steges 51 befindlichen Dehnmeßstreifen 54, 54' und die auf wenigstens einer der breiteren Seiten des Steges 51 befestigten Dehnmeßstreifen 55, 55' sind so geklebt, daß sie orthogonal zur Steglängsrichtung ausgerichtet sind. Die Dehnmeßstreifen 54, 54' dienen ausschließlich der Steck- und Ziehkraftmessung und die Dehnmeßstreifen 55, 55' bewirken in erster Linie eine Temperaturfehlerkompensation.

Die Enden der Schlitze 52, 52' laufen in Bohrungen 56, 56' aus. Mit diesen Bohrungen 56, 56' ist eine leichtere Biegsamkeit des Steges 51 gegeben und somit eine größere meßbare Verformung im Bereich der Dehnmeßstreifen 54, 54' vorhanden. Außerdem verhindern die Bohrungen 56, 56' bei schwingender Belastung ein Brechen des Steges 51 im Bereich der Enden der Schlitze 52, 52'. Die Bohrungen 56, 56' haben dabei einen wesentlich größeren Durchmesser als die Breite der Schlitze 52, 52'. Die Meßempfindlichkeit des Sensors 21 kann durch Wahl der Länge und Breite der Schlitze 52, 52'; 53, 53' sowie der Variation der Bohrungsdurchmesser der Bohrungen 56, 56' oder durch eine entsprechende Änderung des Steg-Höhen/Breitenverhältnisses erfolgen.

Die Dehnmeßstreifen 54, 54' und 55, 55' sind mit jeweils einem Leiter eines auf einer der breiteren Seiten des Steges 51 aufgeklebten Lötstützpunktes 57 verbunden, und diese Leiter sind wiederum auf dem Lotstützpunkt 57 mit jeweils einem Leiter, durch die die Meßsignale über ein Kabel 25 einem Verstärker und der entsprechenden Meßwertverarbeitung zugeführt werden, verlötet.

Die Außenteile 50, 50' des Sensors 21 verfügen über an ihren Außenseiten angebrachten Flächen 58, 58', die einer normierten Schlüsselweite eines Gabelschlüssels entsprechen, und dienen zur verspannungsfreien Befestigung des Sensors 21 auf dem Meßschlitten 19 und am Adapter 22.

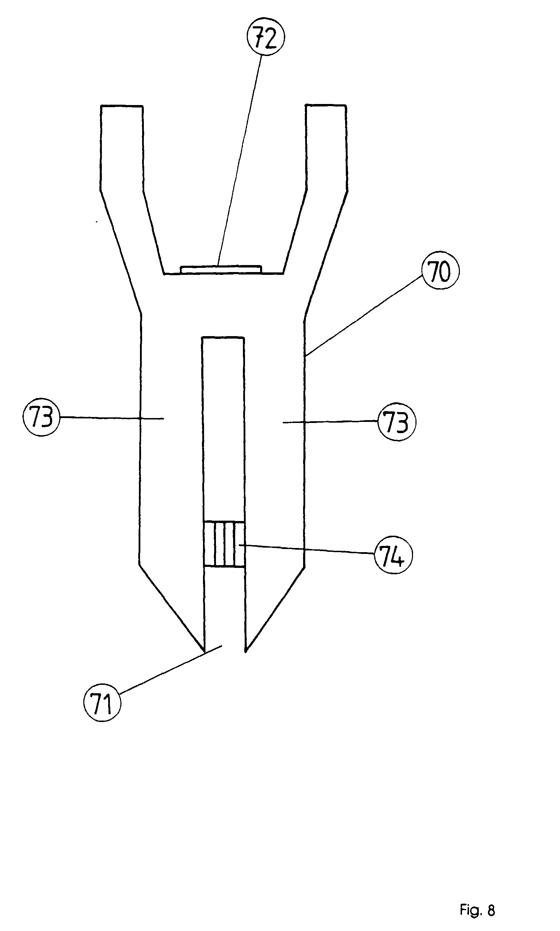

Aus Figur 8 geht die spezielle Ausführungsform eines Meßdornes, der besonders für die Messung der Steckund/oder Ziehkraft von Tulpenkontakten anwendbar ist, hervor.

Der Meßdorn 70 verfügt über zwei parallele Meßschäfte 73, die durch einen Schlitz 71 getrennt sind, so daß die zumindest oberflächengehärteten Meßschäfte 73 beim Einführen in den Steckkontakt eine Bewegung aufeinander zu und beim Ausführen eine Bewegung voneinander weg ausführen können. Diese Relativbewegung der beiden Meßschäfte 73 dient als indirekter Meßwert für die Steckkraft und kann mittels eines an den beiden Meßschäften 73 im Schlitz 71 befestigten Piezo-Sensor 74 oder mit einem oberhalb des Schlitzes 71 orthogonal zu diesem am Meßdorn 70 befestigten Dehnmeßstreifen 72, der die Verformung in diesem Bereich des Meßdornes 70, die durch die Relativbewegung der Meßschäfte 73 hervorgerufen wird, ausnutzt, gemessen werden.

## Patentansprüche

1. Verfahren zur Steck- und Ziehkraftmessung von am Band mittels Stanzwerkzeugen gefertigten Steckkontakten, bei dem
die Kraftmessung an den Steckkontakten (15), anschließend an den Werkzeugauslauf des Stanzwerkzeuges in dem Zeitabschnitt vorgenommen wird, in dem sich das Stanzwerkzeug im Bereich des unteren Umkehrpunktes oder vor bzw. nach der Montage im Steckergehäuse befindet, wobei die Steck- und/oder Ziehkräfte der Steckkontakte beim Eintauchen und/oder Herausziehen eines kalibrierten Meßdornes (17) in den Steckkontakt (15) mittels eines mit dem Meßdorn (17) verbundenen Sensors (21) bestimmt werden,
daß der gemessene Wert mit gespeicherten zulässigen Kraftgrenzwerten verglichen wird,
und daß bei Über- oder Unterschreitung dieses Grenzbereiches ein Signal erzeugt wird, das einen Fertigungsfehler anzeigt.

2. Verfahren nach Anspruch 1,
dadurch gekennzeichnet, daß die Steck- und/oder Ziehkräfte in einem werkzeugabhängigen Meßhubbereich gemessen werden.

3. Verfahren nach Anspruch 1 und 2,
dadurch gekennzeichnet, daß die Meßwerte einem Spitzenwertspeicher (4) zugeführt und der Spitzenwert mit den zulässigen Kraftgrenzwerten verglichen wird.

4. Verfahren nach einem der Ansprüche 1 und 2, dadurch gekennzeichnet, daß die Steck- und/oder Ziehkräfte hubsynchron zur Bewegung des Meßdornes (17) gemessen und der so ermittelte Kraft-Wegverlauf mit einem abgespeicherten werkzeugabhängigen Toleranzbereich um eine vorgegebene Kraft-Wegkurve verglichen, und daß wenn Kraftmeßwerte außerhalb dieses Toleranzbereiches gemessen werden, ein Signal erzeugt wird.

5. Verfahren nach einem der Ansprüche 1 bis 4,
dadurch gekennzeichnet, daß mit dem erzeugten Signal eine Abtrenneinrichtung (10), zur Entfernung fehlerhafter Steckkontakte, angesteuert wird.

6. Verfahren nach Anspruch 1 bis 5,
dadurch gekennzeichnet, daß die Gut- und
Schlecht-Informationen einem Schieberegister (9) zugeführt werden und eine Ansteuerung der Abtrenneinrichtung (10) erst nach Erreichen einer vorgegebenen Signalzahl erfolgt.

## Claims

1. Method of measuring plug-in and tensile forces on plug contacts produced from the strip by means of stamping tools, in which
the measurement of force on the plug-in contacts (15) is undertaken following the withdrawal of the stamping tool during the period of time in which the stamping tool is located in the vicinity of the lower reversal point, or before or after assembly in the plug housing, the plug-in and/or tensile forces of the plug-in contacts being determined during insertion and/or withdrawal of a calibrated measuring mandrel (17) into the plug-in contact (15) by means of a sensor (21) connected to the mandrel (17),
in that the measured value is compared with stored acceptable threshold force values,
and in that, when this threshold range is exceeded or undershot, a signal is generated which indicates a manufacturing error.

2. Method according to claim 1,
characterised in that the plug-in and/or tensile forces are measured in a measurement stroke range dependent on the tool.

3. Method according to claim 1 and 2,
characterised in that the measurement values are passed to a peak-value memory (4), and the peak value is compared with the acceptable threshold force values.

4. Method according to one of claims 1 and 2,
characterised in that the plug-in and/or tensile forces are measured in synchronous stroke with the movement of the measuring mandrel (17), and the power path ; configuration thus determined is compared with a stored tool-dependent tolerance range about a predetermined power path curve, and in that if power measurement values outwith this tolerance range are measured, a signal is generated.

5. Method according to one of claims 1 to 4,
characterised in that a separating means (10) for removing faulty plug-in contacts is triggered by the signal generated.

6. Method according to claim 1 to 5,
characterised in that the go- and no-go instructions are passed to a shift register (9), and triggering of the separating means (10) is effected only after a predetermined number of signals has been reached.

## Revendications

1. Procédé pour la mesure de la force d'embrochage et de la force de débrochage de connecteurs réalisés en continu au moyen d'outils de poinçonnage, dans lequel la mesure de force sur les connecteurs (15) est effectuée immédiatement à la sortie de l'outil de poinçonnage lors de la période dans laquelle l'outil de poinçonnage se trouve dans la zone du point mort inférieur ou avant ou après le montage dans le boîtier de connecteur, les forces d'embrochage et/ou de débrochage des connecteurs étant déterminées lors de l'introduction et/ou l'extraction d'un tampon (17) calibré de mesure dans et/ou du connecteur (15) au moyen d'un capteur (21) relié au tampon (17) de mesure, dans lequel la valeur mesurée est comparée à des va leurs limites mémorisées admissibles de force, et dans lequel, lors d'un dépassement ou d'un sous-dépassement de cette plage limite, un signal est généré qui indique une erreur de fabrication.

2. Procédé selon la revendication 1, caractérisé en ce que les forces d'embrochage et/ou de débrochage sont mesurées dans une plage de course de mesure qui dépend de l'outil.

3. Procédé selon la revendication 1 et 2, caractérisé en ce que les valeurs de mesure sont amenées à une mémoire (4) de valeur crête et en ce que la valeur crête est comparée aux valeurs limites admissibles de force.

4. Procédé selon la revendication 1 ou 2, caractérisé en ce que les forces d'embrochage et/ou de débrochage sont mesurées de manière synchrone avec la course par rapport au mouvement du tampon (17) de mesure et en ce que l'évolution force-course ainsi déterminée est comparée à une plage mémorisée de tolérance qui dépend de l'outil et est située autour d'une courbe prédéterminée force-course, et en ce qu'un signal est généré dans le cas où des valeurs de mesure de force situées à l'extérieur de la plage de tolérance sont mesurées.

5. Procédé selon l'une quelconque des revendications 1 à 4, caractérisé en ce qu'avec un signal généré, un dispositif (10) de séparation destiné à l'enlèvement des fiches défaillantes est commandé.

6. Procédé selon les revendications 1 à 5, caractérisé en ce que les informations de bonne/mauvaise qualité sont amenées à un registre (9) de décalage, et une commande du dispositif (10) de séparation s'effectue seulement après avoir atteint un nombre prédéfini de signaux.
